(19) Europäisches Patentamt
European Patent Office
Office européen des brevets

(11) Veröffentlichungsnummer: **0 012 356**
**A1**

# (12) EUROPÄISCHE PATENTANMELDUNG

(21) Anmeldenummer: 79104945.5

(22) Anmeldetag: 05.12.79

(51) Int. Cl.³: C 08 L 51/04, C 08 L 69/00

(30) Priorität: 12.12.78 DE 2853571

(43) Veröffentlichungstag der Anmeldung: 25.06.80 Patentblatt 80/13

(84) Benannte Vertragsstaaten: BE DE FR GB IT NL

(71) Anmelder: BAYER AG, Zentralbereich Patente, Marken und Lizenzen, D-5090 Leverkusen 1, Bayerwerk (DE)

(72) Erfinder: Müller, Eberhard, Dr., Hermann-Hesse-Strasse 7, D-5090 Leverkusen 1 (DE)
Erfinder: Ott, Karl-Heinz, Dr., Paul-Klee-Strasse 54, D-5090 Leverkusen (DE)
Erfinder: Pampus, Gottfried, Dr., Friedrich-Weskott-Strasse 14, D-5090 Leverkusen 1 (DE)
Erfinder: Schnetger, Jochen, Dr., Im Obstgarten 9, D-8990 Lindau/Bodolz (DE)

## (54) Thermoplastisch-elastomere Polymermischung.

(57) Thermoplastisch-elastomere Polymermischungen aus einem Pfropfpolymerisat aus einem während der Pfropfung vernetzten Kautschuk und mindestens teilweise aufgepropften Einheiten eines Vinylaromaten, eines Alkylmethacrylats, Acrylnitril oder deren Gemischen und einem aromatischen Polycarbonat, Polystyrol, Polymethylmethacrylat, Styrol-Acrylnitril-Copolymeren oder deren Gemischen.

EP 0 012 356 A1

0012356

BAYER AKTIENGESELLSCHAFT 5090 Leverkusen, Bayerwerk
Zentralbereich Kb/AB
Patente, Marken und Lizenzen

## Thermoplastisch-elastomere Polymermischung

Die vorliegende Anmeldung betrifft thermoplastisch-elastomere Polymermischungen aus

A. einem Pfropfpolymerisat aus einem während der Pfropfung vernetzten Kautschuk als Pfropfbasis und einem Thermoplastanteil von mindestens teilweise aufgepfropften Einheiten eines Vinylaromaten, eines Alkylmethacrylats, Acrylnitril oder deren Gemischen und

B. einem aromatischen Polycarbonat, Polystyrol, Polymethylmethacrylat, Styrol-Acrylnitril-Copolymeren oder deren Gemischen.

Bereits bekannte thermoplastisch verarbeitbare Elastomere sind z.B. Styrol-Butadien-Dreiblockcopolymere (US-Patent 3 265 765). Sie können u.a. entweder durch Umsetzung von Dilithiumpolybutadienen mit Styrol oder durch Verknüpfen von Polystyrol-Polybutadienyl-Lithium-Diblockpolymeren mit geeigneten di- oder mehrfunktionellen Verbindungen erhalten werden.

Unterhalb der Glastemperatur des Polystyrols zeigen diese Polymere technologische Eigenschaften, die mit denen konventionell hergestellter Kautschukvulkanisate vergleichbar sind. Sie besitzen bei Raumtemperatur ein gutes elastisches Verhalten und hohe Festigkeitswerte bei variablen Härte-Einstellungen. Bei Temperaturen oberhalb des Glasübergangs von Polystyrol befinden sich diese Produkte in einem schmelzähnlichen Zustand und lassen sich wie unvulkanisierte Kautschuke verarbeiten, wobei der Übergang vom kautschuk- zum vulkanisatähnlichen Zustand reversibel ist. Morphologisch gesehen bestehen diese Polymeren aus einer Kautschukmatrix in welche die damit chemisch verknüpften Polystyroleinheiten ("glassy balls") eingelagert sind.

Ein wesentlicher Nachteil derartiger Systeme besteht in ihrer geringen Wärmestandfestigkeit, die durch eine gewisse Teilverträglichkeit der Polystyroleinheiten mit der Polybutadienmatrix bedingt ist. So beginnen z.B. die Polystyrolblöcke der Dreiblockelastomeren bereits oberhalb von 60°C zu erweichen. Außerdem muß bei den üblichen Herstellungsverfahren äusserst sorgfältig gearbeitet werden, da die Festigkeiten z.B. bereits durch geringe Anteile an Polystyrol-Polybutadien-Diblöcken, die durch Abbruchreaktionen mit Verunreinigungen leicht entstehen können, erheblich abfallen.

Bekannt sind außerdem thermoplastische Elastomere, die durch Abmischung von isotaktischem Polypropylen oder Polyethylen mit mehr oder weniger stark vernetzter Ethylen-Propylen-Dien-Terpolymeren oder durch Abmischung

von modifiziertem Polyisobutylen mit Polyethylen hergestellt werden (US-Patente 3 758 643, 3 806 558, 3 835 201 und 3 862 106).

Man nimmt an, daß diese Produkte ihre spezifischen Eigenschaften dadurch erhalten, daß sich Thermoplast- und Kautschukanteile durch Verknäuelungen oder Verhakungen miteinander verknüpfen. Bei diesen Produkten ist die Festigkeits-Bruchdehnungs-Relation ungünstig, auch haben sie für bestimmte Anwendungen zu niedrige Elastizität bei tiefen Temperaturen.

Weiterhin bekannt sind Pfropfpolymerisate aus Dienkautschuken und Styrol, Styrol/Acrylnitril und Styrol/Acrylnitril/Acrylestern, die eine kugelförmige Verteilung von Kautschukteilchen in einer Harzmatrix aufweisen. Sie zeigen jedoch eine ungünstige Festigkeits-Bruchdehnungs-Relation, haben eher thermoplastische als elastische Eigenschaften und werden zur Schlagfestmachung von Kunststoffen wie Polystyrol, Polycarbonat oder Styrol-Acrylnitril-Copolymerisaten verwendet.

Es wurde nun gefunden, daß Polymermischungen aus den nachstehend beschriebenen Kautschukpfropfpolymerisaten und aromatischen Polycarbonaten, Polystyrol, Polymethylmethacrylat, Styrol-Arylnitril-Copolymeren oder deren Gemische, thermoplastische Elastomere darstellen, die ein ausgezeichnetes Festigkeitsverhalten besitzen, ohne daß deren Bruchdehnung wesentlich beeinträchtigt wird. Überraschenderweise müssen die Pfropfpolymerisate nicht unbedingt verträglich sein mit den zur Abmischung verwendeten Polycarbonaten bzw. den anderen thermoplastischen Polymeren, um die vorteilhaften Eigenschaften der erfindungsgemäßen Polymermischungen zu erreichen.

Gegenstand der Erfindung sind thermoplastisch-elastomere Polymermischungen aus

A. 100 Gew.-Teilen eines Pfropfpolymerisates aus

1. 50 - 75 Gew.-% eines unvernetzten Kautschuks als Pfropfbasis, der während der Pfropfung zu 50 - 100 Gew.-% vernetzt wird, und

2. 25 - 50 Gew.-% eines Thermoplastanteils aus polymerisierten Einheiten eines Vinylaromaten, eines Alkylmethacrylats, Acrylnitril oder deren Gemischen, die zu 30-90 Gew.-% aufgepfropft sind, wobei die Summe von 1 und 2 100 Gew.-% beträgt, und

B. 5 - 30 Gew.-Teilen mindestens eines aromatischen Polycarbonats, dessen lineare Ketten zu mindestens 50 % aus Struktureinheiten der Formel 1 bestehen

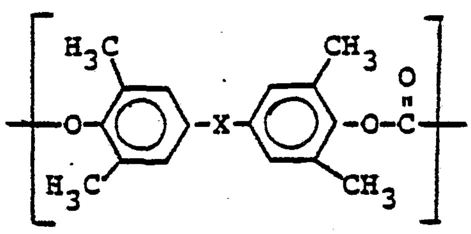

(1)

in der X für $C_1$-$C_5$-Alkylen oder -Alkyliden steht, Polystyrol, Polymethylmethacrylat, Styrol-Acrylnitril-Copolymeren oder deren Gemischen.

Vorzugsweise enthalten die erfindungsgemäßen Polymermischungen auf 100 Gew.-Tle. des Pfropfpolymerisates A 10 - 20 Gew.-Tle. der thermoplastischen Komponente B.

Bei der Herstellung des Pfropfpolymerisates A selbst kann man durch Variation des Verhältnisses von Kautschuk zu Thermoplastanteil sowie des bei der Pfropfung sich einstellenden Vernetzungsgrades einen großen Härtebereich (Shore A bei Raumteperatur 20 bis 100) einstellen, ohne die Zugfestigkeits-Dehnungs-Relation für einen sehr breiten Anwendungsbereich ungünstig zu beeinflussen. Durch Verwendung entsprechender Pfropfpolymerisate A erhält man dann z.B. erfindungsgemäße Polymermischungen mit niedriger Shore A-Härte, die gleichzeitig eine hohe Festigkeit besitzen.

Als Pfropfgrundlage können Natur- und Synthesekautschuke verwendet werden. Geeignete Synthesekautschuke sind Homo- und Copolymerisate von gegebenenfalls halogensubstituierten konjugierten Dienen mit 4 bis 8 Kohlenstoffatomen wie Butadien, Isopren und Chloropren und deren Copolymerisate mit Styrol oder Acrylnitril. Beispielhaft seien genannt: Polybutadien, Polyisopren, Polychloropren, Acrylnitril-Butadien- und Styrol-Butadien-Copolymere. Weitere als Pfropfgrundlage geeignete Synthesekautschuke sind Ethylen-Vinylacetat-Copolymere mit einem Vinylacetatgehalt von 30 bis 98 Gew.-%, Ethylen-Propylen-Copolymere und Terpolymere von Ethylen und Propylen, z.B. mit Ethylidennorbornen und Dicyclopentadien. Bevorzugt sind Polybutadien, Butadien-Styrol- und Butadien-Acrylnitril-Copolymere, Ethylen-Propylen-Terpolymere oder deren Gemische und Ethylen-Vinylacetat-Copolymere. Bevorzugte Gemische bestehen aus 10 bis 90 Gew.-% Butadien-Styrol-Copolymer und 10 bis 90 Gew.-% Butadien-Acrylnitril-Copolymer bzw. aus 10 bis 90 Gew.-% Polybutadien und 10 bis 90 Gew.-% Ethylen-Propylen-Terpolymer.

Als Pfropfmonomere geeignete Vinylaromaten sind Styrol und $C_1$-$C_4$-Alkylderivate des Styrols mit insgesamt 8 bis 12 Kohlenstoffatomen wie $\alpha$-Methylstyrol und p-Methylstyrol. Geeignete Alkylmethacrylate sind Ester der Methacrylsäure mit aliphatischen $C_1$-$C_4$-Alkoholen wie Methyl-, Ethyl-, n-Propyl- und Isobutylmethacrylat. Bevorzugt als Pfropfmonomere sind Styrol, Methylmethacrylat, Acrylnitril und Acrylnitril-Methylmethacrylat-Gemische.

Die Pfropfpolymerisate A können in an sich bekannter Weise, z.B. durch radikalische Polymerisation in Emulsion, Lösung oder nach Lösungs-Fällungs-Verfahren hergestellt werden. Bei der radikalischen Pfropfung in Emulsion werden die Reaktionsbedingungen nach den üblichen Regeln der Emulsionspolymerisation ausgewählt (D.C. Blakeliy, Emulsion Polymerisation, Theory and Practice, Applied Science Publishers Ltd., London 1975). Die zur Pfropfung in Emulsion verwendeten Kautschuklatices können Teilchengrößen zwischen 50 und 800 nm haben, bevorzugt sind 100 bis 400 nm. Der Gelgehalt der Kautschuke kann zwischen 0 und 30 Gew.-% liegen. Vorzugsweise werden Gemische aus 60 Gew.-% oder mehr eines Kautschuks mit einem Gelgehalt von 0 bis 5 Gew.-% und 40 Gew.-% oder weniger eines Kautschuks mit einem Gelgehalt von 5 bis 30 Gew.-% verwendet.

Bei der Pfropfung in Lösung wird der Kautschuk in einem aliphatischen oder aromatischen Lösungsmittel wie Hexan, Benzol, Toluol oder deren Gemischen gelöst. Bei der Pfropfung von Ethylen-Vinylacetat-Copolymeren werden

die dafür üblichen Lösungsmittel wie tert.-Butanol verwendet. Die Kautschuklösungen haben einen Feststoffgehalt von 5 bis 20, vorzugsweise von 10 bis 12 Gew.-%. Nach Zugabe von Monomeren und Initiator und gegebenenfalls eines Reglers wird die Pfropfpolymerisation bei Temperaturen zwischen 40 und 140°C 4 bis 18 Stunden unter Rühren durchgeführt.

Als Initiatoren können z.B. Peroxide wie Dilauroylperoxid, Dibenzoylperoxid und Cumolhydroperoxid oder Ethylperhexanoat in Mengen von 1,5 bis 10, vorzugsweise von 3 bis 5 Gew.-Teilen pro 100 Gew.-Teile Kautschuk, verwendet werden. Als Regler und Pfropfhilfe kann Acrylamid in Mengen von 0,5 bis 5 Gew.-%, bezogen auf die Pfropfmonomeren, zugesetzt werden.

Durch die während der Pfropfung eintretende Vernetzung liegt der Gelgehalt des Kautschuks im Pfropfpolymerisat A zwischen 50 und 100 Gew.-%. Die Menge des thermoplastischen Anteils im Pfropfpolymerisat beträgt 25 bis 50, vorzugsweise 30 bis 40 Gew.-%, wovon 30 bis 90, vorzugsweise 50 bis 90 Gew.-% aufgepfropft sind. Die Pfropfäste haben einen L-Wert (in Dimethylformamid bei 25°C) von 20 bis 120, vorzugsweise von 40 bis 80 (der L-Wert entspricht $\eta$ spez./c für c = 5 g/l).

Bei den als Komponente B eingesetzten Polycarbonaten handelt es sich um aromatische Polycarbonate, deren lineare Ketten zu mindestens 50 % aus Struktureinheiten der Formel 1 bestehen, worin X = $C_1$-$C_5$-Alkylen oder -Alkyliden ist.

Gemäß der Erfindung verwendbare Polycarbonate werden aus Bisphenolen der Formel 2,

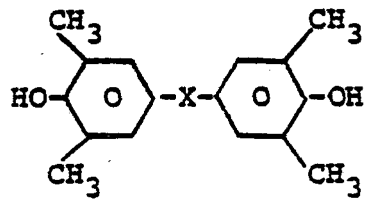

(2)

in der X die angegebene Bedeutung hat, in bekannter Weise hergestellt.

Durch Mitverwendung von Bisphenolen, die nicht unter Formel 2 fallen, werden Copolycarbonate erhalten, in denen nur ein Teil, jedoch mindestens 50 %, an Einheiten der Formel 1 enthalten ist.

Es können anstatt solcher Copolycarbonate auch Mischungen von Polycarbonaten aus Bisphenolen, die nicht unter Formel 2 fallen, verwendet werden, wenn der Gesamtgehalt der Mischungen an Einheiten der Formel 1 nicht geringer als 50 % ist.

Die gemäß der Erfindung einsetzbaren Polycarbonate sind in den deutschen Offenlegungsschriften 2 063 050, 1 570 703, 2 211 956, 2 211 957, 2 248 817 und 2 615 038 beschrieben.

Bevorzugt sind Polycarbonate, die aus mindestens 75 % Struktureinheiten der Formel 1 bestehen. Besonders bevorzugt sind Polycarbonate, die nur aus Struktureinheiten der Formel 1 bestehen.

Den Polycarbonateinheiten der Formel 1 können z.B. folgende Bisphenole zugrunde liegen:

Bis-(3,5-dimethyl-4-hydroxyphenyl)-methan
1,1-Bis-(3,5-dimethyl-4-hydroxyphenyl)-ethan
1,1-Bis-(3,5-dimethyl-4-hydroxyphenyl)-propan
2,2-Bis-(3,5-dimethyl-4-hydroxyphenyl)-propan
2,2-Bis-(3,5-dimethyl-4-hydroxyphenyl)-butan
2,4-Bis-(3,5-dimethyl-4-hydroxyphenyl)-butan
2,4-Bis-(3,5-dimethyl-4-hydroxyphenyl)-2-methylbutan
3,3-Bis-(3,5-dimehhyl-4-hydroxyphenyl)-pentan.

Besonders bevorzugt ist von diesen Bisphenolen das 2,2-Bis-(3,5-dimethyl-4-hydroxyphenyl)-propan.

Beispiele für nicht unter die Formel 2 fallende Bisphenole, die zur Herstellung der Copolycarbonate bzw. zur Herstellung von Polycarbonaten aus nicht unter die Formel 2 fallenden Bisphenole verwendet werden können, sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole
sowie deren kernalkylierte und kernhalogenierte Verbindungen.

Diese und weitere geeignete aromatische Dihydroxyverbindungen sind in den US-Patentschriften 3 028 365, 2 999 835, 3 148 172, 3 271 368, 2 991 273, 3 271 367, 3 780 078, 3 014 891 und 2 999 846 und in den deutschen Offenlegungsschriften 1 570 703 und 2 615 038 beschrieben.

Bevorzugt sind:
Bis-(4-hydroxyphenyl)-sulfid
2,2-Bis-(4-hydroxyphenyl)-propan
1,1-Bis-(4-hydroxyphenyl)-cyclohexan
2,2-Bis-(3-methyl-4-hydroxyphenyl)-propan
2,2-Bis-(3,5-dichlor-4-hydroxyphenyl)-propan
2,2-Bis-(3,5-dibrom-4-hydroxyphenyl)-propan
α,α'-Bis-(4-hydroxyphenyl)-p-diisopropylbenzol und
(1,1,3,4,6-Pentamethyl-3-(3,5-dimethyl-4-hydroxyphenyl)-indan-5-ol.

Besonders bevorzugt sind:
2,2-Bis-(4-hydroxyphenyl)-propan und
1,1,3,4,6-Pentamethyl-3-(3,5-dimethyl-4-hydroxyphenyl)-indan-5-ol.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 25 00 092 beschrieben.

Geeignete Verbindungen mit drei oder mehr als drei phenolischen Hydroxygruppen sind beispielsweise Phloroglycin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-/4,4-bis-(4-hydroxyphenyl)-cyclohexyl/-propan, 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4"-dihydroxytriphenyl-methyl)-benzol. Geeignete andere dreifunktionelle Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Die Polycarbonate haben im allgemeinen Molekulargewichte von 10.000 bis 200.000, vorzugsweise von 25.000 bis 100.000, besonders bevorzugt von 20.000 bis 60.000 (gemessen durch Lichtstreuung).

Zur Herstellung der erfindungsgemäßen Polymermischungen werden 100 Gew.-Tle. des Pfropfpolymerisates A mit 5 - 30 Gew.-Tln., vorzugsweise mit 10 - 20 Gew.-Tln. eines Thermoplasten B gemischt. Als thermoplastische Komponente B dienen die vorerwähnten aromatischen Polycarbonate, Polystyrol, Polymethylmethacrylat, Styrol-Acrylnitril-Copolymere oder deren Gemische.

Die Abmischung des Pfropfpolymerisates A und des Thermoplasten B kann direkt z.B. in einem Innenmischer,

in einer Schnecke oder auf einer Walze bei 160-250°C erfolgen. Ebensogut können auch Emulsionen oder Lösungen der Komponenten A und B miteinander gemischt und die resultierende Polymermischung daraus isoliert werden. In einer besonderen Ausführungsform der Lösungsherstellung der Pfropfpolymerisate A wird die Pfropfbasis zusammen mit der thermoplastischen Komponente B gelöst und dann die Pfropfung vorgenommen, da manche Pfropfpolymerisate A mit hohem Kautschukanteil in vernetztem Zustand schwierig mit Thermoplasten abzumischen sind. Entsprechend kann man bei Emulsionspolymerisationen die thermoplastische Komponente B im Reaktionsmedium dispergieren.

Die Zugfestigkeiten der Pfropfpolymerisat-Thermoplastmischungen liegen zwischen 7 und 20 MPa, ihre (Bruch)-Dehnungen zwischen 200 und 400 %. Sie sind damit in der Festigkeits-Dehnungs-Relation Abmischungen aus Polypropylen und Ethylen-Propylen-Terpolymeren überlegen, die Festigkeiten von 7-16 MPa und Dehnungen von 50 - 200 % besitzen. Im Vergleich mit thermoplastischen Styrol-Butadien-Dreiblockelastomeren, die etwa gleiche Festigkeiten aufweisen, haben die erfindungsgemäßen Polymermischungen den Vorteil, daß die zugrunde liegenden Pfropfpolymerisate A leichter herstellbar sind.

Die Polymermischungen können bei Temperaturen von 160-250°C auf der Walze einwandfrei verarbeitet werden, z.T. sogar auf nichterhitzten Walzen. Auch die Herstellung von Formteilen im Spritzgußverfahren ist problemlos.

Die folgenden Beispiele erläutern die Erfindung. Die angegebenen Teile oder Prozente beziehen sich stets auf das Gewicht.

Beispiele

Die Pfropfpolymerisate A werden nach den in den Beispielen beschriebenen Verfahren in Emulsion, in Lösung oder nach einem Lösungs-Fällungs-Verfahren hergestellt.

Bei der Durchführung in Emulsion werden nach der Pfropfung 0,5 % (bezogen auf Pfropfpolymerisat) 2,6-Di-tert.-butyl-p-kresol, dispergiert in Wasser, eingerührt und die Polymerisate dann mit 2 %iger NaCl-, $MgSO_4$- oder Essigsäurelösung bei 50°C gefällt und bei 70°C im Vakuum getrocknet.

Bei den Lösungs- bzw. Lösungs-Fällungs-Polymerisaten werden nach der Polymerisation 0,5 % des o.g. Stabilisators eingerührt, das Polymerisat dann durch Strippen von Restmonomeren und Lösungsmittel befreit und im Vakuum bei 70°C getrocknet.

Zur Abmischung werden folgende Thermoplasten verwendet:

Polycarbonat (entsprechend Formel 1): 2,2-Bis-(3,5-dimethyl-4-hydroxyphenyl)propan-Polycarbonat, Molgew. ca. 38 000;

Styrol-Acrylnitril-Copolymer: 28 % Acrylnitrilgehalt, L-Wert = 75-85 (in Dimethylformamid bei 25°C);

Polymethylmethacrylat: L-Wert = 30 - 33 (Dimethylformamid, 25°C);

Polystyrol: L-Wert = 65-70 (Dimethylformamid, 25°C).

Die Herstellung des erfindungsgemäßen Polymermischungen erfolgt entweder

a) direkt auf einer Walze oder
b) in einer Lösung des Pfropfpolymerisates A und des Thermoplasten B in Hexan. Die Mischung wird anschließend durch Strippen vom Lösungsmittel befreit, bei 70°C im Vakuum getrocknet und bei 170°C zu einem Walzfell verarbeitet. In einer speziellen Ausführungsform
c) wird der Thermoplast B bereits in Lösung in Toluol bei der Herstellung des Pfropfpolymerisates A der Polymerisationslösung zugegeben.

Die mechanischen Werte der in den Beispielen beschriebenen Abmischungen werden nach DIN 53 504 bestimmt und sind in Tabelle 1 angegeben.

Beispiel 1

Styrol wird in wäßriger Emulsion auf ein Butadien-Acrylnitril-Copolymer (28 % Acrylnitrilgehalt, Gelgehalt < 5 %, Defo-Härte 1000) gepfropft.

Dazu werden 3290 g Butadien-Acrylnitril-Copolymer-Latex (25,8 % Feststoffgehalt) mit einer Lösung von 7,5 g Kaliumpersulfat in 200 g entsalztem Wasser versetzt und innerhalb von 4 Stunden gleichzeitig 400 g Styrol sowie eine Mischung aus 43 g einer 70 %igen Lösung des Natriumsalzes einer disproportionierten Abietinsäure, 22 g 1-n Natronlauge und 375 g entsalztem Wasser unter Rühren bei 60-65°C zugetropft.

Nach jeder halben Stunde wird der Umsatz durch eine Feststoffbestimmung kontrolliert. Nach Beendigung der Polymerisation wird noch zwei Stunden nachgeführt (ca. 100 % Monomerenumsatz). Nach Zugabe des Stabilisators und Fällung wird das Pfropfpolymerisat 24 Stunden bei 70°C im Vakuum getrocknet.

Abmischung mit
a) 10 Teilen Polycarbonat
b) 10 Teilen Polycarbonat und 10 Teilen Polystyrol.

Beispiel 2

Methylmethacrylat wird in wäßrige Emulsion auf ein Butadien-Acrylnitril-Copolymer (33 % Acrylnitrilgehalt Gelgehalt < 5 %, Defo-Härte 700) gepfropft. Dazu werden

3900 g Butadien-Acrylnitril-Copolymer-Latex (Feststoffgehalt 20,1 %) mit einer Lösung von 7,5 g Kaliumpersulfat in 200 g entsalztem Wasser versetzt und innerhalb von 4 Stunden gleichzeitig 810 g Methylmethacrylat sowie eine Mischung aus 375 g entsalztem Wasser und 12 g eines Alkylsulfonats unter Rühren bei 60 - 65°C zugetropft.

Nach jeder halben Stunde wird der Umsatz durch eine Feststoffbestimmung kontrolliert. Nach Beendigung der Polymerisation wird noch zwei Stunden nachgerührt (ca. 90 % Monomerenumsatz).

Nach Zugabe des Stabilisators und Fällung wird das Pfropfpolymerisat 24 Stunden bei 70°C im Vakuum getrocknet.

Abmischung mit

a) 10 Teilen Polycarbonat
b) 10 Teilen Polycarbonat und 10 Teilen Polystyrol
c) 10 Teilen Polycarbonat und 10 Teilen Polymethacrylat
d) 10 Teilen Polycarbonat und 10 Teilen Styrol-Acrylnitril-Copolymer
e) 10 Teilen Polystyrol
f) 10 Teilen Styrol-Acrylnitril-Copolymer
g) 10 Teilen Styrol-Acrylnitril-Copolymer und 10 Teilen Polymethylmethacrylat

Beispiel 3

Analog Beispiel 2, nur wird hier statt 810 g Methylmethacrylat zum Pfropfen eine Mischung aus 280 g Methylmethacrylat und 120 g Acrylnitril verwendet (Monomerenumsatz ca. 85 %).

Abmischung mit

a) 20 Teilen Polymethylmethacrylat
b) 20 Teilen Styrol-Acrylnitril-Copolymer
c) 10 Teilen Polycarbonat und 10 Teilen Polymethylmethacrylat
d) 10 Teilen Polycarbonat und 10 Teilen Styrol-Acrylnitril-Copolymer
e) 10 Teilen Polycarbonat, 5 Teilen Styrol-Acrylnitril-Copolymer und 5 Teilen Polystyrol.

Beispiel 4

Eine Mischung aus 2477 g Butadien-Acrylnitril-Copolymer-Latex (Feststoffgehalt 20,4 %, Acrylnitrilgehalt im Copolymer 33 %, Defo-Härte 700) und 923 g Styrol-Butadien-Copolymer-Latex (Feststoffgehalt 24,3 %, Styrolgehalt im Copolymer 23,5 %) wird mit einer Lösung von 7,5 g Kaliumpersulfat in 300 g entsalztem Wasser versetzt und innerhalb von 4 Stunden gleichzeitig 534 g Methylmethacrylat sowie eine Mischung aus 375 g entsalztem Wasser und 18 g eines Alkylsulfonats unter Rühren bei 63 - 65°C zugetropft. Sonst analog Beispiel 1, Monomerenumsatz ca. 88 %.

Abmischung mit

a) 20 Teilen Polymethylmethacrylat
b) 20 Teilen Styrol-Acrylnitril-Copolymer

Beispiel 5

2 kg Ethylen-Propylen-Terpolymer (Termonomer: Ethylidennorbornen, 50 % Ethylen-Gehalt, Jodzahl 24, Mooney ML-4' [100°C] 95) werden in 17 kg n-Hexan gelöst, bei Raumtemperatur 2 kg Methylmethacrylat, 0,20 kg Acrylamid sowie eine Lösung von 0,1 kg Dibenzoylperoxid in 0,7 kg Toluol zugegeben und anschließend 18 Stunden bei 70°C gerührt. Danach werden in der Reaktionsmischung je 200 g Polycarbonat und 200 g Polystyrol gelöst, die Mischung gestrippt und im Vakuum bei 70°C getrocknet.

Beispiel 6

In einem 6-l-Kolben werden 4,32 kg Ethylen-Vinylacetat-Copolymer (40 % Vinylacetatgehalt) in 3240 ml tert.-Butanol gelöst und dann bei 60°C innerhalb von 2 Stunden eine Lösung von 430 g Styrol, 22 g Acrylamid und 3,6 g tert.-Butylperpivalat in 450 ml tert.-Butanol zugetropft. Danach wird 4 Stunden bei 60°C und 8 Stunden bei 80°C gerührt (ca. 85 % Monomerenumsatz). Die entstandene Dispersion wird mit i-Propanol gefällt.
Abmischung mit

a) 10 Teilen Polycarbonat
b) 20 Teilen Polycarbonat
c) 10 Teilen Polystyrol
d) 10 Teilen Polycarbonat und 10 Teilen Polystyrol.

Beispiel 7

Herstellung des Pfropfpolymerisates analog Beispiel 6 mit 430 g Methylmethacrylat anstelle von Styrol (Monomerenumsatz ca. 93 %).

Abmischung mit

a) 20 Teilen Polycarbonat
b) 10 Teilen Polycarbonat und 10 Teilen Polystyrol.

Beispiel 8

Herstellung des Pfropfpolymerisates analog Beispiel 6 mit einem Gemisch aus 300 g Methylmethacrylat und 130 g Acrylnitril anstelle von Styrol (Monomerenumsatz ca. 96 %.

Abmischung mit

a) 20 Teilen Polycarbonat
b) 10 Teilen Polycarbonat und 10 Teilen Polystyrol.

Beispiel 9

Zu einer Lösung von 1,8 kg cis-1,4-Polybutadien ($\eta$ = 2,4 [dl/g]) und 0,54 kg Polycarbonat in 25 kg Toluol werden eine Lösung von 0,076 kg Cumolhydroperoxid in 0,2 kg Toluol sowie 2,5 kg Methylmethacrylat gegeben und 14 Stunden bei 120°C gerührt. Danach wird durch Strippen aufgearbeitet und im Vakuum bei 70°C getrocknet.

Beispiel 10

Zu der Lösung eines Gemisches aus 0,8 kg Ethylen-Propylen-Terpolymer (Terkomponente: Ethylidennorbornen, Jodzahl 24, 50 % Ethylengehalt, Mooney ML 1+4 [100°C]

95), 1 kg cis-1,4-Polybutadien ($\eta$ = 2,4 [dl/g]) und 0,54 kg Polycarbonat in 25 kg Toluol werden eine Lösung von 0,076 kg Cumolhydroperoxid in 0,2 kg Toluol sowie 2,375 kg Methylmethacrylat und 0,125 kg Acrylamid gegeben und 14 Stunden bei 120°C gerührt.

Danach wird durch Strippen aufgearbeitet und im Vakuum bei 70°C getrocknet.

Beispiel 11

Analog Beispiel 9, nur werden hier statt 2,5 kg Methylmethacrylat 2,5 kg Styrol zur Pfropfung verwendet.

TABELLE 1

| Beispiel-Nr. | Festigkeit (MPa) | Dehnung (%) | Modul (100%) (MPa) | Shore A bei °C 23 | 70 | 100 | 120 | 150 | Shore D bei °C 23 | 70 | Elastizität bei 23 °C (%) | Strukturfestigkeit (N) |
|---|---|---|---|---|---|---|---|---|---|---|---|---|
| 1 Pfropfpolymerisat | 6,4 | 300 | 3,3 | 69 | 58 | 38 | 34 | 30 | 25 | 10 | 23 | 135 |
| 1 Mischung a) | 10,0 | 205 | 6,9 | 81 | 65 | 57 | 49 | 38 | 26 | 13 | 23 | 230 |
| 1 Mischung b) | 13,9 | 255 | 8,1 | 86 | 75 | 65 | 52 | 43 | 35 | 20 | 26 | 260 |
| 2 Pfropfpolymerisat +) | 23,7 | 240 | 17,8 | 96 | 93 | 73 | 48 | 37 | 62 | 35 | 43 | 760 |
| 2 Mischung a) ++) | 22,3 | 245 | 18,0 | 96 | 95 | 75 | 50 | 35 | 65 | 38 | 40 | 760 |
| 2 Mischung b) | 25,2 | 215 | 21,9 | 96 | 96 | 81 | 60 | 38 | 67 | 42 | 43 | 825 |
| 2 Mischung c) | 24,3 | 180 | 20,8 | 97 | 96 | 80 | 55 | 41 | 67 | 45 | 41 | 765 |
| 2 Mischung d) | 25,5 | 230 | 20,8 | 97 | 96 | 80 | 53 | 40 | 68 | 45 | 43 | 875 |
| 2 Mischung e) | 22,1 | 190 | 19,8 | 97 | 95 | 81 | 57 | 43 | 66 | 41 | 41 | 700 |
| 2 Mischung f) | 22,8 | 225 | 18,4 | 97 | 96 | 80 | 50 | 34 | 66 | 41 | 44 | 785 |
| 2 Mischung g) | 25,1 | 275 | 19,0 | 97 | 96 | 78 | 51 | 37 | 69 | 41 | 42 | 820 |
| 3 Pfropfpolymerisat | 11,0 | 350 | 4,0 | 77 | 53 | 40 | 38 | 34 | 22 | 12 | 19 | 145 |
| 3 Mischung a) | 15,7 | 280 | 7,9 | 92 | 72 | 54 | 47 | 39 | 37 | 16 | 24 | 250 |
| 3 Mischung b) | 15,1 | 260 | 9,8 | 87 | 82 | 56 | 46 | 37 | 46 | 22 | 31 | 355 |
| 3 Mischung c) | 14,8 | 245 | 9,0 | 91 | 72 | 58 | 52 | 47 | 40 | 17 | 24 | 275 |
| 3 Mischung d) | 15,3 | 255 | 9,3 | 94 | 75 | 57 | 50 | 43 | 41 | 18 | 25 | 265 |

Fortsetzung nächste S.

TABELLE 1, Fortsetzung:

| Beispiel-Nr. | Festigkeit (MPa) | Dehnung (%) | Modul(100%) (MPa) | Shore A bei °C 23 | 70 | 100 | 120 | 150 | Shore D bei °C 23 | 70 | Elastizität bei 23°C % | Strukt.-Festigk. (N) |
|---|---|---|---|---|---|---|---|---|---|---|---|---|
| 3 Mischung e) | 16,6 | 235 | 11,2 | 94 | 75 | 62 | 59 | 52 | 43 | 19 | 25 | 295 |
| 4 Pfropfpolymerisat | 11,2 | 205 | 9,9 | 93 | 87 | 65 | 37 | 27 | 45 | 22 | 38 | 340 |
| 4 Mischung a) | 16,0 | 180 | 12,2 | 92 | 95 | 78 | 37 | 23 | 57 | 34 | 46 | 620 |
| 4 Mischung b) | 15,4 | 120 | 10,1 | 92 | 92 | 75 | 36 | 24 | 56 | 33 | 45 | 585 |
| 5 | 16,2 | 130 | 9,2 | 98 | 95 | 95 | 89 | 24 | 57 | 41 | 52 | 340 |
| 6 Mischung a) | 10,9 | 335 | 8,2 | 79 | 23 | 11 | 3 | | 26 | | 39 | 155 |
| 6 Mischung b) | 11,6 | 195 | 10,1 | 92 | 43 | 28 | 21 | | 37 | 3 | 35 | 225 |
| 6 Mischung c) | 10,0 | 555 | 9,5 | 62 | 10 | 3 | | | 17 | | 38 | 155 |
| 6 Mischung d) | 11,1 | 260 | 9,3 | 87 | 37 | 18 | 10 | | 30 | 2 | 40 | 225 |
| 7 Pfropfpolymerisat | 5,9 | 620 | 1,4 | 54 | 12 | 4 | | | 11 | | 40 | 94 |
| 7 Mischung a) | 12,3 | 240 | 5,5 | 79 | 42 | 17 | 8 | | 26 | 3 | 37 | 150 |
| 7 Mischung b) | 11,5 | 280 | 5,7 | 75 | 40 | 16 | 6 | | 25 | | 40 | 180 |
| 8 Mischung a) | 10,5 | 240 | 6,8 | 85 | 56 | 35 | 24 | 2 | 33 | 6 | 36 | 175 |
| 8 Mischung b) | 10,2 | 260 | 6,5 | 82 | 54 | 34 | 24 | 2 | 32 | 3 | 38 | 200 |
| 9 | 17,1 | 300 | 9,3 | 86 | 74 | 46 | 35 | 24 | 32 | 17 | 39 | 240 |
| 10 | 13,8 | 290 | 10,2 | 89 | 56 | 34 | 23 | 12 | 33 | 17 | 40 | 240 |
| 11 | 12,2 | 355 | 8,5 | 92 | 81 | 55 | 30 | 10 | 37 | 21 | 39 | 195 |

+) qualmt auf der Walze

++) qualmt nicht, Verarbeitung besser

Patentansprüche

1. Thermoplastisch-elastomere Polymermischung aus
   A. 100 Gew.-Tln. eines Pfropfpolymerisates aus

      1. 50-75 Gew.-% eines unvernetzten Kautschuks als Pfropfbasis, der während der Pfropfung zu 50 - 100 Gew.-% vernetzt wird, und

      2. 25-50 Gew.-% eines Thermoplastanteils aus polymerisierten Einheiten eines Vinylaromaten, eines Alkylmethacrylats, Acrylnitril oder deren Gemischen, die zu 30-90 Gew.-% aufgepfropft sind, wobei die Summe von 1 und 2 100 Gew.-% beträgt, und

   B. 5-30 Gew.-Tln. mindestens eines aromatischen Polycarbonats, dessen lineare Ketten zu mindestens 50 % aus Struktureinheiten der Formel 1 bestehen

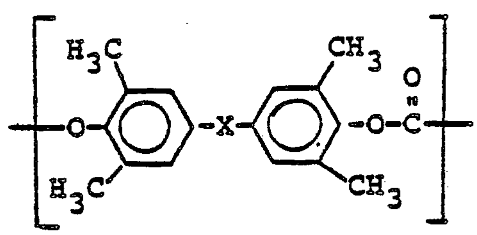

(1)

in der X für $C_1$-$C_5$-Alkylen oder -Alkyliden steht, Polystyrol, Polymethylmethacrylat, Styrol-Acrylnitril-Copolymeren oder deren Gemischen.

2. Polymermischung nach Anspruch 1 aus
   A. 100 Gew.-Tln. des Pfropfpolymerisates A und
   B. 10 - 20 Gew.-Tln. der thermoplastischen Komponente B.

3. Polymermischung nach Anspruch 1 und 2, dadurch gekennzeichnet, daß die Pfropfbasis des Pfropfpolymerisates A aus Polybutadien, Acrylnitril-Butadien-Copolymer, Styrol-Butadien-Copolymer, Ethylen-Propylen-Terpolymer oder deren Gemischen oder Ethylen-Vinylacetat-Copolymer besteht.

4. Polymermischung nach Anspruch 1 bis 3, dadurch gekennzeichnet, daß die Pfropfbasis des Pfropfpolymerisates A aus
   a) 10 bis 90 Gew.-% Butadien-Styrol-Copolymer und
   b) 10 bis 90 Gew.-% Butadien-Acrylnitril-Copolymer besteht.

5. Polymermischung nach Anspruch 1 bis 3, dadurch gekennzeichnet, daß die Pfropfbasis des Pfropfpolymerisates A aus
   a) 10 bis 90 Gew.-% Polybutadien und
   b) 10 bis 90 Gew.-% Ethylen-Propylen-Terpolymer besteht.

6. Polymermischung nach Anspruch 1 bis 5, dadurch gekennzeichnet, daß die zur Herstellung des Pfropfpolymerisates A verwendeten Pfropfmonomeren aus Styrol, Acrylnitril, Methylmethacrylat oder deren Gemischen bestehen.

7. Polymermischung nach Anspruch 1 und 2, dadurch gekennzeichnet, daß zur Herstellung des Pfropfpolymerisates A als Pfropfbasis ein Ethylen-Vinylacetat-Copolymer und als Pfropfmonomere Styrol und/oder Methylmethacrylat verwendet werden und die Pfropfung in tert. Butanol als Lösungs-Fällungs-Polymerisation durchgeführt wird.

8. Polymermischung nach Anspruch 1 und 2, dadurch gekennzeichnet, daß zur Herstellung des Pfropfpolymerisates A als Pfropfbasis ein Ethylen-Propylen-Terpolymer und als Pfropfmonomere Styrol und/oder Methylmethacrylat verwendet werden und die Pfropfung in n-Hexan als Lösungs-Fällungs-Polymerisation durchgeführt wird.

9. Polymermischung nach Anspruch 1 bis 6, dadurch gekennzeichnet, daß die thermoplastische Komponente B bereits bei der Herstellung des Pfropfpolymerisats A zusammen mit der Pfropfbasis im Reaktionsmedium vorliegt.

Europäisches Patentamt

# EUROPÄISCHER RECHERCHENBERICHT

0012356
Nummer der Anmeldung
EP 79104945.5

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 717 165 (BAYER AG) (02-11-1978)<br>+ Patentanspruch 1 +<br>-- | 1-9 | C 08 L 51/04<br>C 08 L 69/00 |
| | DE - A1 - 2 653 143 (BAYER AG)<br>+ Patentanspruch 1; Seite 9, letzter Absatz - Seite 10, 1. Absatz +<br>-- | 1-9 | |
| | DE - A - 2 329 585 BAYER AG)<br>+ Patentansprüche +<br>-- | 1-9 | RECHERCHIERTE SACHGEBIETE (Int. Cl.³) |
| | FR - A -1 604 656 (BORG-WARNER)<br>+ Resume +<br>-- | 1 | C 08 L |
| | GB - A -1 476 912 (MITSUBISHI)<br>+ Beispiele; Patentansprüche +<br>-- | 1 | |
| | US - A - 4 042 647 (CORNELL)<br>+ Patentansprüche +<br>-- | 1 | |
| | US - A - 3 177 268 (FRAZER)<br>+ Patentansprüche +<br>---- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 12-03-1980 | DICHER |